Europäisches Patentamt

European Patent Office

Office européen des brevets

(11) Publication number: **0 122 601**
**B2**

(12) NEW EUROPEAN PATENT SPECIFICATION

(45) Date of publication of the new patent
specification: **08.08.90**

(21) Application number: **84104112.2**

(22) Date of filing: **12.04.84**

(51) Int. Cl.⁵: **C 08 L 69/00** // C08L67/02,
C08L23/02, C08L33/00

(54) Polycarbonate resin composition.

(30) Priority: **15.04.83 JP 65350/83**

(43) Date of publication of application:
**24.10.84 Bulletin 84/43**

(45) Publication of the grant of the patent:
**16.09.87 Bulletin 87/38**

(45) Mention of the opposition decision:
**08.08.90 Bulletin 90/32**

(84) Designated Contracting States:
**BE DE FR GB IT NL**

(56) References cited:
**EP-A- 110 222**      **JP-A-58 059 256**
**EP-B- 20 605**       **US-A-3 405 198**
**EP-B- 64 648**       **US-A-3 937 757**
**WO-A-83/00491**      **US-A-4 245 058**

**CHEMICAL ABSTRACTS, vol. 90, no. 12, Mar 19,
1979, p. 34, no. 88332b, Columbus, Ohio (US)**

(73) Proprietor: **IDEMITSU PETROCHEMICAL CO.
LTD.**
**1-1, Marunouchi 3-chome Chiyoda-ku
Tokyo (JP)**

(72) Inventor: **Endo, Hideki
No. 1660, Kamiizumi Sodegaura-machi
Kimitsu-gun Chiba-ken (JP)**
Inventor: **Ishii, Tokuo
No. 216, Imazuasayama
Ichihara-shi Chiba-ken (JP)**

(74) Representative: **Türk, Dietmar, Dr. rer. nat. et al
Türk, Gille + Hrabal Patentanwälte
Brucknerstrasse 20
D-4000 Düsseldorf 13 (DE)**

**Description**

The present invention relates to new polycarbonate resin compositions which can be used as engineering resins.

Background of the invention

Polycarbonate resins are engineering resins superior in heat resistance and impact resistance, but have disadvantages in that fluidity is bad, chemical resistance is poor, and thickness dependency of impact resistance is large.

It is known from JP—A—53129246 that in order to improve the above-described disadvantages of polycarbonate resins, saturated polyester resins and polymers containing acrylate rubbers are compounded thereto. These resin compositions, however, are still poor in impact resistance at low temperatures although improved by a certain extent in fluidity and chemical resistance. Thus they are limited in practical application.

Summary of the invention

An object of the present invention is to provide a polycarbonate resin composition which is free of the above-described problems.

The present invention relates to a polycarbonate resin composition comprising:

(A) 40 to 90% by weight of a polycarbonate resin,

(B) 46 to 9% by weight of polyethylene terephthalate (PET),

(C) 7 to 0.5% by weight of low density polyethylene having a melt index of not more than about 4 grams per 10 minutes and density of 0.910 to 0.940 gram per cubic centimeter, and

(D) 7 to 0.5% by weight of an acrylate rubber-containing polyvinyl resin or an acrylate/methacrylate resin.

Detailed description of the invention

Aromatic polycarbonate resins to be used as Component (A) of the resin composition of the present invention are not limited by their methods of preparation; various types of aromatic polycarbonate resins can be used. Typical examples are a polycarbonate resin prepared from bisphenol A and phosgene by the phosgene process and a polycarbonate resin prepared from bisphenol A and carbonic acid diester, such as diphenyl carbonate, by the ester exchange process. The molecular weight of the aromatic polycarbonate resins is usually from 10 000 to 100 000 and preferably from 20 000 to 40 000. These aromatic polycarbonate resins can be used singly or in combination with each other. Suitable examples of suitable aromatic polycarbonate resins are described in JP—A—57200445.

The amount of the aromatic polycarbonate resins being compounded as Component (A) should be from 40 to 90% by weight based on the total weight of the resin composition. If the amount of the aromatic polycarbonate resins compounded is less than 20% by weight, superior characteristics than the aromatic polycarbonate resins possess inherently cannot be exhibited, whereas if it is in excess of 94.6% by weight, it is not possible to modify the aromatic polycarbonate resins sufficiently satisfactorily.

Preferred PET resins are those having an intrinsic viscosity (measured to 25°C in a mixed solvent consisting of equal volumes of tetrachloroethane and phenol) of 0.4 to 1.5, preferably 0.8 to 1.4.

The amount of PET being compounded should be from 46 to 9% by weight based on the total weight of the resin composition. If the amount of the saturated polyester resins compounded is in excess of 50% by weight, the low temperature impact resistance of the resin composition drops, whereas if it is less than 5% by weight, the solvent resistance of the resin composition decreases.

As polyolefin resins to be used as Component (C) of the resin composition of the present invention, low density polyethylene having a melt index (MI) of not more than 4 grams per 10 minutes, preferably not more than 2 grams per 10 minutes, and having a density of 0.910 to 0.940, is used.

These polyolefin resins should be compounded so that they constitute 7 to 0.5% by weight of the resin composition. If the amount of polyolefin resins compounded is in excess of 15% by weight, flow marks are likely to appear in articles molded using the resulting resin composition, whereas if it is less than 0.2% by weight, the low temperature impact resistance of the resin composition undesirably drops.

As acrylate rubber-containing polyvinyl resins to be used as Component (D) of the resin composition of the present invention, any suitable ones prepared by known procedures can be used. An example of such acrylate rubber-containing polyvinyl resins is prepared by polymerizing at least one vinyl monomer in the presence of a rubber-like polymer composed mainly of alkyl acrylate and/or alkyl methacrylate. The alkyl group of these alkyl acrylate and alkyl methacrylate preferably has from 2 to 10 carbon atoms. Suitable examples of such alkyl acrylate and alkyl methacrylate are ethyl acrylate, butyl acrylate, 2-ethylhexyl acrylate, and n-octyl methacrylate. The term "rubber-like polymer composed mainly of alkyl acrylate and/or alkyl methacrylate" is used herein to mean polymers prepared by reacting not less than 70% by weight of alkyl acrylate and/or alkyl methacrylate and not more than 30% by weight of other vinyl monomers copolymerizable with said alkyl acrylate and alkyl methacrylate, such as methyl methacrylate, acrylonitrile, vinyl acetate, and styrene. This term further incudes polymers prepared by adding suitable amounts of

2

polyfunctional monomers such as divinyl benzene, ethylene dimethacrylate, triallyl cyanurate, and triallyl isocyanurate to the above-described alkyl acrylate and/or alkyl methacrylate.

Vinyl monomers to be polymerized in the presence of the above-described rubber-like polymers include aromatic vinyl compounds such as styrene and α-methylstyrene; acrylic acid esters such as methyl acrylate and ethyl acrylate; and methacrylic acid esters such as methyl methacrylate and ethyl methacrylate. These vinyl monomers are polymerized singly or in combination with each other and, furthermore, may be polymerized in combination with other vinyl monomers, such as vinyl cyanide compounds (e.g. acrylonitrile and methacrylonitrile) and vinyl esters (e.g., vinyl acetate and vinyl propionate). This reaction can be performed in any suitable manner, such as by bulk polymerization, suspension polymerization, or emulsion polymerization. Especially preferred are those rubber-like polymers prepared by emulsion polymerization.

It is necessary for the acrylate rubber content of acrylate rubber-containing polyvinyl resins as prepared above to be at least 20% by weight.

Acrylate/methacrylate resins to be used as Component (D) of the resin composition of the present invention are polymers composed mainly of acrylate and methacrylate. This acrylate includes esters of saturated or unsaturated, straight or branched aliphatic hydrocarbons having from 1 to 10 carbon atoms, preferably from 2 to 8 carbon atoms, and acrylic acid. Suitable examples are methyl acrylate, ethyl acrylate, isobutyl acrylate, n-butyl acrylate, 2-ethylhexyl acrylate, n-octyl acrylate, 1,3-butylene diacrylate, and 1,4-butanediol diacrylate. Of these compounds, butyl acrylate is preferred. In addition, acrylate copolymers prepared from acrylate and not more than 30% by weight, preferably not more than 10% by weight of vinyl monomers copolymerizable with acrylate, such as acrylonitrile, vinyl acetate and styrene, can be used. Moreover, acrylate copolymers prepared by adding suitable amounts of polyfunctional monomers such as divinylbenzene, ethylene dimethacrylate, triallyl cyanurate, and triallyl isocyanurate can be used.

The methacrylate includes esters of saturated or unsaturated, straight or branched aliphatic hydrocarbons having from 1 to 10 carbon atoms, preferably from 1 to 4 carbon atoms, and methacrylic acid. Suitable examples are methyl methacrylate, isobutyl methacrylate, 1,3-butylene dimethacrylate, n-butyl methacrylate, and ethyl methacrylate. Of these compounds, methyl methacrylate is preferred.

Acrylate/methacrylate resins can be prepared from the above-described acrylates and methacrylates by various procedures. Usually an acrylate polymer is first prepared by the usual method and then a methacrylate monomer is polymerized in the presence of the acrylate polymer to prepare the acrylate/methacrylate resin. If desired, small amounts of vinyl cyanide compounds such as acrylonitrile and methacrylonitrile, or of vinyl esters such as vinyl acetate and vinyl propionate can be added and copolymerized. The process of polymerization can be performed by various techniques such as bulk polymerization, suspension polymerization, and emulsion polymerization. In particular, those resins prepared by emulsion polymerization are suitable. These acrylate/methacrylate resins are composed of 50 to 95% by weight, preferably 60 to 80% by weight of acrylate and 50 to 5% by weight, preferably 40 to 20% by weight of methacrylate.

The amount of Component (D) compounded should be controlled within the range ranging between 7 and 0.5% by weight. If the amount of Component (D) compounded exceeds 15% by weight, colorability of the resin composition becomes poor, whereas if it is less than 0.2% by weight, low temperature impact resistance of the resin composition undesirably drops.

The polycarbonate resin composition of the present invention comprises, as described above, Components (A), (B), (C) and (D). In addition, if desired, higher fatty acids and/or higher fatty acid esters can be added to the resin composition in an amount of at least 0.1 part by weight, preferably 0.1 to 2 parts by weight per 100 parts by weight of the resin composition. Moreover, inorganic fillers and various additives can be added.

Inorganic fillers which can be used include glass fiber, calcium carbonate, magnesium carbonate, dolomite, silica, diatomaceous earth, alumina, titanium oxide, iron oxide, zinc oxide, magnesium oxide, pumice powder, calcium sulfate, magnesium sulfate, barium sulfate, calcium sulfite, talc, clay, mica, asbestos, glass baloon, glass bead, calcium silicate, glass powder, montmorillonite, bentonite, carbon black, graphite, iron powder, lead powder, aluminum powder, and molybdenum sulfide. These compounds can be used singly or as mixtures comprising two or more thereof. The amount of inorganic fillers being used is from 0.1 to 80 parts by weight per 100 parts by weight of the polycarbonate resin, Component (A). In amounts less than 0.1 part by weight, the stiffness of the resin composition is improved only insufficiently, whereas in amounts more than 80 parts by weight the impact resistance of the resin composition drops.

As additives, commonly used ones such as flame retarders, releasing agents, weathering stabilizers, antioxidants, antistatic agents, heat stabilizers, colorants, plasticizers, reinforcing agents, surface active agents, lubricants, and nucleators can be used. These additives are chosen appropriately and added in suitable amounts, taking into account, for example, the purpose for which the resin composition is used.

A method of mixing the above-described ingredients to prepare the resin composition of the present invention is not critical and can be performed in any suitable manner, such as by the use of tumblers, ribbon blenders, high-speed mixers, V-type blenders, kneaders, and pelletizers.

The resin composition of the present invention can be molded into various articles by various known techniques such as injection molding, extrusion molding, press molding, and rotary molding. In addition, it is suitable for use in large sized injection molding.

3

The polycarbonate resin composition of the present invention as prepared by compounding the above-described Components (A), (B), (C) and (D) in the specified amounts have various advantages over conventional polycarbonate resin compositions. Especially significant advantages of the present resin composition are that low temperature impact resistance is greatly high and thickness dependency of the impact resistance is small since it contains specified amounts of polyolefin resins. Furthermore, the present resin composition is superior in physical properties such as chemical resistance, fluidity, colorability, coating properties, and plating properties. Even after being colored, its physical properties such as impact resistance, chemical resistance and fluidity hardly drop.

Hence the polycarbonate resin composition of the present invention is suitable for use in fabrication of car parts such as a bumper, an instrumental panel, and a door handle and housing of domestic electric appliances such as a radio and TV set.

The present invention is described in greater detail with reference to the following Examples and Comparative Examples.

Examples 1 to 4 and Comparative Examples 1 to 5

Components (A), (B), (C) and (D) in the amounts shown in Table 1 and 3 parts by weight of an anthraquinone/perylene/perinone mixed dye were dry-blended and pelletized and, thereafter, injection-molded (resin temperature: 280°C) to produce molded articles. These articles were tested, and the results are shown in Table 1.

4

TABLE 1

| | Resin composition (parts by weight) | | | | Izod impact strength (kg · cm/cm)[1] | | | | Solvent resistance[2] (critical strain %) | Appearance[3] |
|---|---|---|---|---|---|---|---|---|---|---|
| Run No. | Component (A) PC resin | Component (B) PET | Component (C) polyethylene | Component (D) MAS | 10°C | 0°C | −10°C | −20°C | | |
| Ex. 1 | 82 | 15 | LDPE¹ 1.5 | 1.5 | 91 | 88 | 75 | 28 | 0.45 | good |
| Ex. 2 | 70 | 25 | LDPE¹ 2.5 | 2.5 | 87 | 84 | 70 | 28 | 0.52 | good |
| Ex. 3 | 58 | 35 | LDPE¹ 3.5 | 3.5 | 81 | 75 | 69 | 29 | 0.67 | good |
| Ex. 4 | 70 | 25 | LDPE² 2.5 | 2.5 | 83 | 48 | 29 | 26 | 0.46 | good |
| Comp. Ex. 1 | 25 | 35 | LDPE¹ 20 | 20 | 58 | 50 | 45 | 40 | 1.0< | hazy |
| Comp. Ex. 2 | 94 | 3 | LDPE¹ 1.5 | 1.5 | 95 | 85 | 77 | 69 | 0.31 | hazy |
| Comp. Ex. 3 | 65 | 15 | LDPE¹ 18.5 | 1.5 | 76 | 66 | 63 | 58 | 0.60 | hazy |
| Comp. Ex. 4 | 65 | 15 | LDPE¹ 1.5 | 18.5 | 73 | 65 | 59 | 50 | 0.60 | somewhat hazy and poor coloration |
| Comp. Ex. 5 | 70 | 25 | — — | 5 | 25 | 17 | 17 | 14 | 0.43 | somewhat hazy |

PC Resin: Bisphenol A type polycarbonate resin (average molecular weight: 27,100)

PET: Polyethylene terephthalate (intrinsic viscosity as measured in a mixed solvent consisting of equal volumes of ethane tetrachloride and phenol at 25°C: 1.2)

LDPE¹: Low density polyethylene (density: 0.920 gram per cubic centimeter (g/cm³); MI: 0.4 gram per 10 minutes (g/10 min))

LDPE²: Low density polyethylene (density: 0.921 gram per cubic centimeter (g/cm³); MI: 3.5 grams per 10 minutes (g/10 min))

MAS: Methyl methacrylate/butyl acrylate/styrene copolymer ("Metablen W-529" manufactured by Mitsubishi Rayon Co., Ltd.)

[1] Izod Impact Resistance: Measured using a notched test specimen of thickness 0,3175 cm (1/8 inch) according to ASTM D256.

[2] Solvent Resistance: Indicated in the critical strain as determined by the 1/4 ellipsoid process (Nakatsuji et al., *Shikizai (Colorants)*, *39*, 455 (1966)) using a mixed solvent of toluene and isooctane (40:60 by volume).

[3] Appearance: Evaluated by flow marks appearing at the gate portion of plates (thickness: 3.2 millimeters; width: 80 millimeters; length: 80 millimeters).

Examples 5 to 8 and Comparative Examples 6 to 10

The procedure of each of Examples 1 to 4 and Comparative Examples 1 to 5 as described above was repeated wherein a methyl methacrylate/n-butyl acrylate copolymer (MA) ("KM 330" manufactured by Rohm & Haas Co., methyl methacrylate content: 30% by weight; n-butyl acrylate content: 70% by weight) was used in place of the methyl methacrylate/butyl acrylate/styrene copolymer (MAS). The results are shown in Table 2.

TABLE 2

| Run No. | Resin composition (parts by weight) | | | | Izod impact strength (kg · cm/cm)[1] | | | | Solvent resistance[2] (critical strain %) | Appearance[3] |
|---|---|---|---|---|---|---|---|---|---|---|
| | Component (A) PC resin | Component (B) PET | Component (C) polyethylene | Component (D) MA | 10°C | 0°C | −10°C | −20°C | | |
| Ex. 5 | 82 | 15 | LDPE[1] 1.5 | 1.5 | 91 | 89 | 76 | 30 | 0.46 | good |
| Ex. 6 | 70 | 25 | LDPE[1] 2.5 | 2.5 | 89 | 85 | 75 | 30 | 0.53 | good |
| Ex. 7 | 58 | 35 | LDPE[1] 3.5 | 3.5 | 82 | 75 | 70 | 31 | 0.67 | good |
| Ex. 8 | 70 | 25 | LDPE[2] 2.5 | 2.5 | 84 | 60 | 40 | 26 | 0.47 | good |
| Comp. Ex. 6 | 25 | 35 | LDPE[1] 20 | 20 | 58 | 51 | 47 | 41 | 1.0< | hazy |
| Ex. 7 | 94 | 3 | LDPE[1] 1.5 | 1.5 | 95 | 86 | 78 | 70 | 0.31 | good |
| Ex. 8 | 65 | 15 | LDPE[1] 18.5 | 1.5 | 75 | 68 | 64 | 58 | 0.60 | hazy |
| Ex. 9 | 65 | 15 | LDPE[1] 1.5 | 18.5 | 74 | 66 | 59 | 50 | 0.60 | somewhat hazy and poor coloration |
| Ex. 10 | 70 | 25 | — — | 5 | 26 | 18 | 17 | 15 | 0.43 | somewhat hazy |

[1], [2], [3] same as in Table 1.

# EP 0 122 601 B2

## Claims

1. A polycarbonate resin composition comprising
   (A) 40 to 90% by weight of a polycarbonate resin,
   (B) 46 to 9% by weight of polyethylene terephthalate,
   (C) 7 to 0.5% by weight of low density polyethylene having a melt index of not more than about 4 grams per 10 minutes and density of 0.910 to 0.940 gram per cubic centimeter, and
   (D) 7 to 0.5% by weight of an acrylate rubber-containing polyvinyl resin or an acrylate/methacrylate resin.

2. The polycarbonate resin composition as claimed in Claim 1, wherein the component (D) is an acrylate rubber-containing polyvinyl resin prepared by polymerizing at least one vinyl monomer in the presence of a rubber-like polymer composed mainly of alkyl acrylate and/or alkyl methacrylate.

3. The polycarbonate resin composition as claimed in Claim 2, wherein the alkylacrylate or allyl methacrylate is one having an alkyl group of from 2 to 10 carbon atoms.

4. The polycarbonate resin composition as claimed in Claim 2, wherein the rubber-like polymer composed mainly of alkyl acrylate and/or alkyl methacrylate is a polymer prepared by reacting not less than 70% by weight of alkyl acrylate and/or alkyl methacrylate and not more than 30% by weight of other vinyl monomer copolymerizable with said alkyl acrylate and alkyl methacrylate.

5. The polycarbonate resin composition as claimed in Claim 2, wherein the rubber-like polymer composed mainly of alkyl acrylate and/or alkyl methacrylate is a polymer prepared by adding polyfunctional monomer selected from the group consisting of divinyl benzene, ethylene dimethacrylate, triallylcyanurate and triallylisocyanurate to the alkyl acrylate and/or alkylmethacrylate and other vinyl monomers.

6. The polycarbonate resin composition as claimed in Claim 2, wherein the component (D) is acrylate/methacrylate resin prepared by using acrylate which is an ester of saturated, straight aliphatic hydrocarbon having from 1 to 10 carbon atoms and acrylic acid, and methacrylate which is an ester of saturated, straight aliphatic hydrocarbon having from 1 to 10 carbon atoms and methacrylic acid.

7. The polycarbonate resin composition as claimed in Claim 6, wherein the acrylate is one selected from the group consisting of methylacrylate, ethylacrylate, isobutyl acrylate and n-butyl acrylate, and the methacrylate is one selected from the group consisting of methyl methacrylate, ethyl methacrylate, isobutyl methacrylate and n-butyl methacrylate.

## Patentansprüche

1. Polycarbonatharz-Zusammensetzung, die umfaßt
   (A) 40 bis 90 Gew.-% eines Polycarbonatharzes,
   (B) 46 bis 9 Gew.-% Polyethylenterephthalat,
   (C) 7 bis 0.5 Gew.-% Polyethylen mit niedriger Dichte mit einem Schmelz-index von nicht mehr als 4 Gramm pro 10 Minuten und einer Dichte von 0.910 bis 0.940 Gramm pro Kubikzentimeter und
   (D) 7 bis 0.5 Gew.-% eines Acrylat-Gummi enthaltenden Polyvinylharzes oder eines Acrylat/Methacrylatharzes.

2. Polycarbonatharz-Zusammensetzung nach Anspruch 1, worin die Komponente (D) ein Acrylat-Gummi enthaltendes Polyvinylharz ist, hergestellt durch Polymerisation wenigstens eines Vinylmonomeren in Gegenwart eines gummiartigen Polymeren, das hauptsächlich aus Alkylacrylat und/oder Alkylmethacrylat besteht.

3. Polycarbonatharz-Zusammensetzung nach Anspruch 2, worin das Alkylacrylat oder Alkylmethacrylat eines ist mit einer Alkylgruppe von 2 bis 10 Kohlenstoffatomen.

4. Polycarbonatharz-Zusammensetzung nach Anspruch 2, worin das gummiartige Polymer, das hauptsächlich aus Alkylacrylat und/oder Alkylmethacrylat besteht, ein Polymer ist, hergestellt durch Umsetzen von nicht weniger als 70 Gew.-% Alkylacrylat und/oder Alkylmethacrylat und nicht mehr als 30 Gew.-% anderer Vinylmonomerer copolymerisierbar mit dem Alkylacrylat und Alkylmethacrylat.

5. Polycarbonatharz-Zusammensetzung nach Anspruch 2, worin das gummiartige Polymer, das hauptsächlich aus Alkylacrylat und/oder Alkylmethacrylat besteht, ein Polymer ist, hergestellt durch Zugabe von polyfunktionellem Monomer ausgewählt aus der Gruppe bestehend aus Divinylbenzol, Ethylen-dimethacrylat, Triallycyanurat und Triallylisocyanurat zum Alkylacrylat und/oder Alkylmethacrylat und anderen Vinylmonomeren.

6. Polycarbonatharz-Zusammensetzung nach Anspruch 2, worin die Komponente (D) Acrylat/Methacrylatharz ist, hergestellt unter Verwendung von Acrylat welches ein Ester aus gesättigtem, Linearem, aliphatischem Kohlenwasserstoff mit 1 bis 10 Kohlenstoffatomen und Acrylsäure ist und Methacrylat, das ein Ester aus gesättigtem, linearem, aliphatischem Kohlenwasserstoff mit von 1 bis 10 Kohlenstoffatomen und Methacrylsäure ist.

7. Polycarbonatharz-Zusammensetzung nach Anspruch 6, worin das Acrylat eines ist, ausgewählt aus der Gruppe bestehend aus Methylacrylat, Ethylacrylat, Isobutylacrylat und n-Butylacrylat, und das Methacrylat eines ist, ausgewählt aus der Gruppe bestehend aus Methylmethacrylat, Ethylmethacrylat, Isobutylmethacrylat und n-Butylmethacrylat.

8

# EP 0 122 601 B2

**Revendications**

1. Composition de résine de polycarbonate comprenant:
(A) 40 à 90% en poids d'une résine de polycarbonate,
(B) 46 à 9% en poids de téréphtalate de polyéthylène,
(C) 7 à 0,5% en poids d'un polyéthylène basse densité ayant un indice de fluidité ne dépassant pas 4 g/10 minutes et une masse spécifique de 0,910 à 0,940 g/cm$^3$, et
(D) 7 à 0,5% en poids d'une résine de polyvinyle contenant un caoutchouc d'acrylate ou d'une résine d'acrylate/méthacrylate.

2. Composition de résine de polycarbonate selon la revendication 1 dans laquelle le composant (D) est une résine de polyvinyle contenant un caoutchouc d'acrylate préparée par polymérisation d'au moins un monomère vinylique en présence d'un polymère caoutchouteux composé principalement d'acrylate d'alkyle et/ou de méthacrylate d'alkyle.

3. Composition de résine de polycarbonate selon la revendication 2 dans laquelle l'acrylate d'alkyle ou le méthacrylate d'alkyle a un groupe alkyle de 2 à 10 atomes de carbone.

4. Composition de résine de polycarbonate selon la revendication 2 dans laquelle le polymère caoutchouteux composé principalement d'acrylate d'alkyle et/ou de méthacrylate d'alkyle est un polymère préparé par réaction d'au moins 70% en poids d'acrylate d'alkyle et/ou de méthacrylate d'alkyle et de pas plus de 30% en poids d'un autre monomère vinylique copolymérisable avec lesdits acrylates d'alkyle et méthacrylates d'alkyle.

5. Composition de résine de polycarbonate selon la revendication 2 dans laquelle de polymère caoutchouteux composé principalement d'acrylate d'alkyle et/ou de méthacrylate d'alkyle est un polymère préparé par addition d'un monomère polyfonctionnel, choisi parmi le divinylbenzène, le diméthacrylate d'éthylène, le cyanurate de triallyle et l'isocyanurate de triallyle, à l'acrylate d'alkyle et/ou méthacrylate d'alkyle et aux autres monomères vinyliques.

6. Composition de résine de polycarbonate selon la revendication 2 dans laquelle le composant (D) est une résine d'acrylate/méthacrylate préparée en utilisant un acrylate qui est un ester d'hydrocarbure aliphatique saturé droit ayant 1 à 10 atomes de carbone et d'acide acrylique et le méthacrylate est un ester d'hydrocarbure aliphatique saturé droit ayant de 1 à 10 atomes de carbone et d'acide méthacrylique.

7. Composition de résine de polycarbonate selon la revendication 6 dans laquelle l'acrylate est choisi parmi l'acrylate de méthyle, l'acrylate d'éthyle, l'acrylate d'isobutyle et l'acrylate de n-butyle et le méthacrylate est choisi parmi le méthacrylate de méthyle, le méthacrylate d'éthyle, le méthacrylate d'isobutyle et le méthacrylate de n-butyle.